# EUROPEAN PATENT SPECIFICATION

(11) **EP 3 025 034 B1**
(45) Date of publication and mention of the grant of the patent: **09.09.2020**
(21) Application number: 14741901.4
(22) Date of filing: 23.07.2014
(51) Int. Cl.: F01N 3/20

(54) **ENGINE EXHAUST GAS ADDITIVE STORAGE SYSTEM**
MOTORABGASZUSATZSPEICHERSYSTEM
SYSTÈME DE STOCKAGE D'ADDITIF DE GAZ D'ÉCHAPPEMENT DE MOTEUR

(30) Priority: 24.07.2013 EP 13177797
(43) Date of publication of application: 01.06.2016
(73) Proprietor: Plastic Omnium Advanced Innovation and Research, 1130 Bruxelles (BE)
(72) Inventor: LECLEC'H, Nicolas, 60280 Margny les Compiegne (FR); GUILLERME, Hervé, 60310 Thiescourt (FR); JEANNETEAU, Simon, 60200 Compiègne (FR)
(74) Representative: Remy, Vincent Noel Paul
(86) International application number: PCT/EP2014/065773
(87) International publication number: WO 2015/011168

(56) References cited:
- EP-A1- 1 236 499
- EP-A1- 2 014 886
- WO-A1-99/02825
- DE-A1-102006 050 808

## Description

### FIELD OF THE INVENTION

The invention relates to an engine exhaust gas additive storage system and the use thereof.

### BACKGROUND OF THE INVENTION

Legislation concerning emissions from vehicles and heavy goods stipulate, among other things, a reduction in the amount of oxides of nitrogen NOₓ discharged into the atmosphere. One known way to achieve this requirement is the use of SCR (selective catalytic reduction), which allows for reduction of the oxides of nitrogen by injecting a reducing agent, generally ammonia, into the exhaust gas system. This ammonia may originate from the thermolytic decomposition of a solution of an ammonia precursor, the concentration of which may be the eutectic concentration. An ammonia precursor is for instance a solution of urea.

Thereto, vehicles are to be equipped with a tank comprising a solution of an ammonia precursor for use as an exhaust gas additive. The vehicle further suitably comprises a device for metering and injecting the desired amount of additive into the exhaust gas system.

For an optimum functioning of the tank, it is well known that several components are present in the tank. EP2029865 mentions a plurality thereof such as pumping means, a pressure regulator, a filter, a heating element and a feed nipple. In order to optimize the assembly of such components, a subassembly is suitably made. This subassembly is also known as a delivery module. Such a delivery module is suitably provided with an outlet from the tank to a line or pipe through which the solution of an ammonia precursor (i.e. urea) is transported to the SCR system. It may also be provided with an electrical connector for connecting and charging any electrical components, such as pumping means and sensors.

The solution, typically a urea solution with at least 20% urea and likely more, for instance at least 30% urea, up to a saturation level, is a solution at room temperature. However, at winter temperatures, the solution can get frozen. In one example, the melting point lies in the range of -15 to -5 °C. This is a winter temperature that is not uncommon for winters in various countries. This freezing not merely requires a heating element so as to allow melting upon a cold start of the vehicle. The freezing may also damage the tank and/or any vulnerable components therein. Such damage is caused by expansion upon freezing. Just as ice has a lower density than liquid water below 4 °C, the frozen urea solution has a lower density that the urea solution in the liquid state.

There is a need for a technique that prevents such damage to the tank of the exhaust gas additive, and/or to any components to be protected provided within the tank. Such components are distinct from the tank shell, i.e. none of the component is the tank shell itself, nor part of it.

Such components to be protected can be chosen from the following list: a pump; a filter; a level gauge; a heater; a temperature sensor; a quality sensor; a pressure sensor; a pressure regulator; a venturi tube. This list is preferably non limitative, even if components selected in this list are more concerned by the invention. In addition, a subassembly of such components (such as a delivery module or a part of a delivery module) is also considered, according to the invention, as a component to be protected.

DE 10 2006 050808 A1 discloses all the characteristics of the preamble part of claim 1.

### SUMMARY OF THE INVENTION

According to a first aspect, the invention provides a system for storing a solution of ammonia precursor for use as an exhaust gas additive according to claim 1.

In a particular embodiment, the delivery module (considered as a component to be protected) comprises a baseplate (or mounting plate, or flange) having walls defining a fence (or compartment) and protruding inside the tank. Advantageously, the baseplate supports for example, electrical components such as a pump; a filter; a level gauge; a heater; a temperature sensor; a quality sensor; a pressure sensor; a pressure regulator. For example, a pump can be placed in between the protruding walls of the baseplate.

In a particular embodiment, the freeze protection device according to the present invention can be designed and arranged to prevent fracture of the baseplate.

In another particular embodiment, the freeze protection device according to the present invention can be designed and arranged to prevent fracture of the electrical component(s) mounted on the baseplate.

According to a second aspect, the invention provides a selective catalytic reduction system for a vehicle comprising the storage system of the invention, an injector for injecting the solution or a reaction product thereof into exhaust gases, and an injection line between said storage system and said injector.

According to a further aspect, the invention relates to the use of such a system for freeze protection.

The freeze protection of the invention allows a selective volume expansion of the solution by removal of a fluid initially contained in a cavity. This cavity is suitably arranged so as to be present, in operation with a tank sufficiently filled with the solution, at least partially and preferably substantially below a surface of the solution. It is an advantage of the freeze protection device of the invention that its cavity can be located at any desired location within the tank. Such desired location is for instance close to a sensitive component assembled within the tank, but alternatively at a location near a tank shell, so as to prevent cracking of said tank shell. A location close to a sensitive component is a location on top of such component, which is more particularly part of the delivery module.

The deformable cavity is suitably defined by one or more walls delimiting said cavity, at least a first one of which is deformable. The term 'wall' is used broadly, in the context of this application, including any type of cavity delimitation such as sheets, foils, rigid walls. It is not excluded that the cavity comprises several chambers, mutually separated by means of an inner cavity wall. Furthermore, part of the wall(s) defining the cavity may be formed by a surface or extension of another element, such as the tank shell, any extension of the tank shell within the tank, or a component. The first deformable wall is for instance balloon-shaped, but an alternatively shape is also feasible. For instance the first wall may be a sheet extending between and attached to - relatively - rigid walls.

The deformation may be of different kinds. In a first embodiment, the deformation comprises shrinking of the material, resulting in a volume reduction of the cavity. In a second embodiment, the deformation comprises a bending of the first wall, for instance from a first convex to a second concave configuration. In a third embodiment, the deformation comprises an expansion of the material under pressure of the solution, which is preferably a rubber-elastic expansion such that the wall will return to its initial non-expanded configuration after that the pressure has dropped. The first deformable wall contains wall portions with a varying degree of deformability. For instance, the wall may contain a relatively flexible ring, and a stiffer portion within said ring. Herewith, the volume reduction of the cavity may be defined to be substantially block shaped. The one or more walls could further constitute a honeycomb-structure with a plurality of cavities between a plurality of deformable sheets. In this manner a controlled volume reduction of the cavity is achievable.

In one suitable embodiment, part of the wall(s) of the cavity may be constituted by a portion of a component, or for instance the delivery module. This option appears to have the advantage of constituting an additional protection: when the volume of the cavity is significantly reduced, a surface of the component will still be covered (or can be designed thereto) by some fluid left within the cavity and/or the deformable walls.

According to the invention, the cavity is defined at a top side of a component. The deformable wall or walls define a cavity of largely cylindrical shape, block-shaped, cone-shaped, truncated cone-shaped, or substantially pyramid-shaped. A cavity with a decreasing cross-section with increasing distance to the component may be beneficial. When the cavity is deformed, the deformable wall or walls may start to extend largely or substantially parallel to said top side of the component. It will be understood that if another face such as a side-face rather than a top face of a component is to be protected, the cavity may be oriented again in a way, so that the deformable wall may extend largely or substantially parallel to said face after the volume reduction of the cavity and the concomitant deformation of the cavity and its one or more walls,

The deformable wall suitably comprises a polymer material. This polymer material is more preferably chosen to have a glass transition temperature below a minimum operation temperature and to be chemically stable up to a predefined upper operation temperature. The minimum operation temperature is for instance in the range of -20 to -80 degrees Celsius, for instance between -30 and -50 degrees Celsius, such as -40 degrees. The upper operation temperature is for instance in the range of 60 to 90 degrees Celsius.

Particularly suitable materials are elastomers. Examples of elastomers are for instance rubbers, such as an EPDM rubber, a natural rubber, an isoprene rubber, a silicone type material (i.e. a polysiloxane such as PDMS), a thermoplastic vulcanisate (TPV) or thermoplastic elastomer (TPE), such as thermoplastic rubbers and more specifically copolymers of rubber and plastic materials. Examples of TPE and TPV materials include styrenic block copolymers, polyolefin blends, elastomeric alloys, thermoplastic polyurethanes, thermoplastic copolyester and thermoplastic copolyamides.

Preferably, the exit extends to outside the tank. This is deemed most beneficial, since the volume can then really be removed from the tank. However, the fluid space could alternatively be located within the tank. In case that the fluid is a gas, then preferably a venting nipple is present extending to outside the tank. In case the fluid is a liquid, a container may be provided. Such container could be located within the tank, for instance if this is more beneficial for stability.

The first wall is suitably attached to a venting channel defining the exit of the cavity and extending between the cavity and a portion of the tank shell. This venting channel moreover enables arranging the cavity at any desired location within the tank. The venting channel suitably extends upwards to said cavity, when the tank is present in a substantially horizontal configuration. However, this is not deemed necessary. The venting channel may alternatively extend laterally and/or in an oblique orientation. The first wall may be assembled to the venting channel with any known assembly technique, including welding, moulding, coating, extruding and the like. It is not excluded that the first wall is substantially composed of the same material as the venting wall, but defined in a smaller thickness.

The venting channel is preferably assembled to a tank shell. Herewith the protection device is as a whole fixated within the tank. One suitable assembly technique is welding and more preferably hot plate welding is used. A suitable material for the venting channel, when it is destined for assembly to the tank shell by means of hot plate welding is high-density polyethylene (HDPE).

Preferably, the exit is provided with a means for selective permeation of the fluid. This means are for instance a membrane, such as a hydrophobic membrane as known per se, for instance of PTFE. The means have the function to prevent that contaminating dust, particles, oil, water and/or other material would enter the venting channel and/or the cavity. Typically, urea storage systems are assembled at a lower side of a vehicle, where there is a relatively big risk for contamination.

Alternatively or additionally, the freeze protection device is provided with a connector, particularly at an outside of the tank shell. A venting tube may then be coupled to said connector. This allows that the fluid is further transferred to a space that is deemed relatively clean.

The fluid for use in the cavity according to the present invention is particularly a fluid at operation temperatures of the storage system, i.e. between the minimum operation temperature and an upper operation temperature. Suitably, the fluid does not have a phase transition within the operation range. The fluid is suitably a gas, for instance air. This has the advantage that no separate expansion volume is needed for expansion of the gas at relatively high operation temperatures of for instance more than 50 °C. However, the use of a specific gas is not excluded. The said venting tube could herein be used for volume expansion (and an easy exit option when pressure gets too high). Alternatively, the fluid may be a non-corrosive liquid.

The pressure under which deformation of the cavity occurs, may be a contact pressure of a frozen body of the solution. Alternatively, the pressure may build up in a liquid pocket that is encapsulated within the frozen body when the solution gets frozen to a large extent. It appears suitable to arrange the cavity such that it is defined within such liquid pocket. The location of such liquid pockets can be specified on the basis of shape of the tank and its location within a vehicle, for instance by means of dedicated software programs, or by experiments.

Suitably, the deformable cavity is defined such that it returns to its initial configuration after the pressure drops. Again, the first wall may return here to its original configuration, which is for instance achieved by appropriate material choice. This return is foreseen to occur particularly in a phase of thawing. In order to support or stimulate this process, the freeze protection device may further be provided with means for reversing the deformation of the first wall. One example of such means is a pump. Another example is a secondary cavity defined outside the tank, and defined through a cavity wall, such that the fluid leaving the -first - cavity upon expansion of the solution is transferred into said second cavity. This latter embodiment has the advantage that no powered means is needed for driving a pump.

If a delivery module is present within the tank, it is suitably provided with a fence extending laterally around at least one component and defining a cavity, and wherein said pressure release means are at least partially present within said cavity and releasing pressure to outside said cavity. It is believed that such fence influences the temperature distribution and also progress of a freezing front through the solution. Typically, the freezing front starts at the outside, typically a bottom side and then moves forward. This progress is however influenced by several design factors, such as a shape of the tank, its location adjacent to other components, but also the presence of a fence. Particularly, it appears that the cavity is more prone to formation of a liquid pocket inside a frozen body. This liquid pocket is particularly relevant for the development of high pressures leading to fracture.

In one implementation, the fence is defined as a wall provided with windows, said wall extending to a height larger than a height of said at least one component, said height being defined relative to a tank surface, at which the delivery module is assembled to said tank. In other words, one sensitive location at which a liquid pocket is expected, is above said at least one component. This at least one component is for instance a pumping means.

In a further suitable implementation, the delivery module is assembled to a bottom side of the tank. This configuration has a plurality of advantages per se, such as a bottom side outlet for the solution. Moreover, it leaves space for a venting nipple tube at a top side.

The freeze protection devices of the invention may be subdivided in several types in relation to their specific function. A first type is a device for gradual freezing. This first type device is arranged at a hot spot within the tank. In other words, a first end of the means defining a channel is present at the hot spot, wherein the liquid pocket is most likely to develop, i.e. where a freezing front is most likely to arrive only very late compared to other spots within the tanks. It is not excluded that more than one hot spot exists within the tank. Clearly, the hot spot that is nearest to sensitive components is most important. One hot spot is therefore believed to be within the said cavity.

A second type is freeze protection devices that are arranged, at least partially, adjacent to heating means, and more particularly adjacent to said fence of the delivery module, either at its inside or at its outside. Compared to the first type of freeze protection devices, these are likely to be provided with a longer venting channel, since the liquid pocket is most likely to develop during refreezing near to a bottom side of the tank. Moreover, the second type of freeze protection devices may be designed for lower pressure waves. For sake of clarity, such refreezing is foreseen to occur after a short usage of the engine in a cold environment. During this usage, melting of the frozen body merely occurs around the heating means. When the engine is thereafter stopped, the locally melted area forms a liquid pocket that will refreeze again. Since the heating means are typically located near to one of said components, this is a dangerous location.

In addition to the freeze protection device according to the invention, a freeze protection device according to an alternative operation principle may be present. Such alternative principle is for instance a device wherein a local portion of the frozen body of the solution that is present within a tube, such as a conical element, is pushed outwards. Therewith, a channel is defined towards a vapour space above said frozen body.

### BRIEF INTRODUCTION OF THE FIGURES

These and other aspects of the invention will be further elucidated with reference to the figures, in which:
Fig 1a-c show schematical representations of a prior art storage system in three phases;
Fig 2a-c show schematical representations of the storage system according to the invention in three phases
Fig. 3 shows in a diagrammatical cross-sectional view a first embodiment of the storage system according to the invention, which is not filled with the solution;
Fig. 4 shows in a diagrammatical cross-sectional view a second embodiment of the storage system according to the invention, filled with the solution.

### DETAILED DESCRIPTION OF ILLUSTRATED EMBODIMENTS

The figures are not drawn to scale and purely intended for illustrative purposes. Equal reference numerals in different figures refer to equal or corresponding elements.

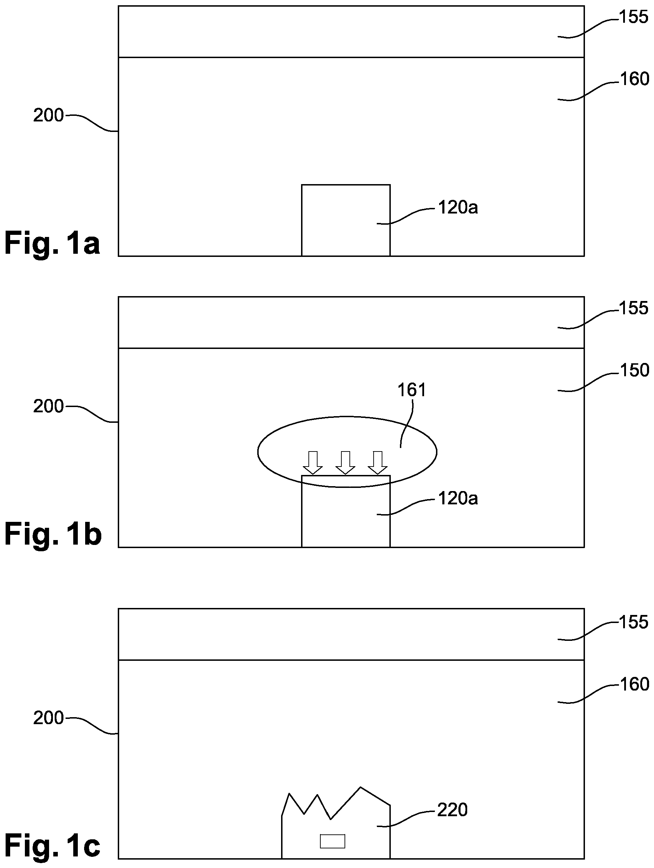

Fig. 1a-c shows a prior art storage system in three phases: Fig. 1a shows the system in an initial phase; Fig. 1b shows the system in a freezing phase and Fig 1c shows the system in a thawing phase. The prior art storage system comprises a tank shell 200 within with a component 120 is assembled.

The present invention is focussed on solving problems occurring in such a cold environment, which is more particularly an environment wherein the solution gets frozen. The solution is a exhaust gas additive, and more particularly a source for a reducing agent of NOₓ. Typically, it is a solution of urea, typically in a concentration of 25-35 wt%. Such a solution has a freezing point in the range of -5 to -15 °C, more particularly around -11 °C. In many locations around the globe, such temperatures are common winter temperatures. When freezing, the urea solution will expand. This volume expansion may result in cracks into the tank 200 and/or damage to components 120. Such damage and cracks are to be prevented.

In the initial phase as shown in Fig. 1a, the tank 200 is filled with the urea precursor solution in a liquid state 160. A vapour space 155 is present above the liquid solution 160.

As shown in this Fig. 1b, nearly the complete solution is frozen into a frozen body 150. Above said frozen body a vapour space 155 is present. Dependent on the amount of solution in the tank, this vapour space 155 may be smaller or larger. A liquid pocket 161 has been left over. The liquid pocket 161 is however encapsulated by the frozen body 150. Hence, when liquid will freeze, its expansion requires the remaining liquid to shrink, resulting in a pressure increase. Experiments have shown that the pressure increase may be as large as 35 bar. This is due to the expansion of the solution upon freezing. Since the liquid solution is still more compressible than the solid solution, the pressure within the liquid pocket 161 rises. The pressure cannot be removed towards the vapour space 155, but works on the component 120.

In the thawing phase as shown in Fig. 1c, the result is found: the component 120 is broken due to overpressure and is now the broken component part 220. Evidently if the component is a heater or a pump, the storage system will no longer work.

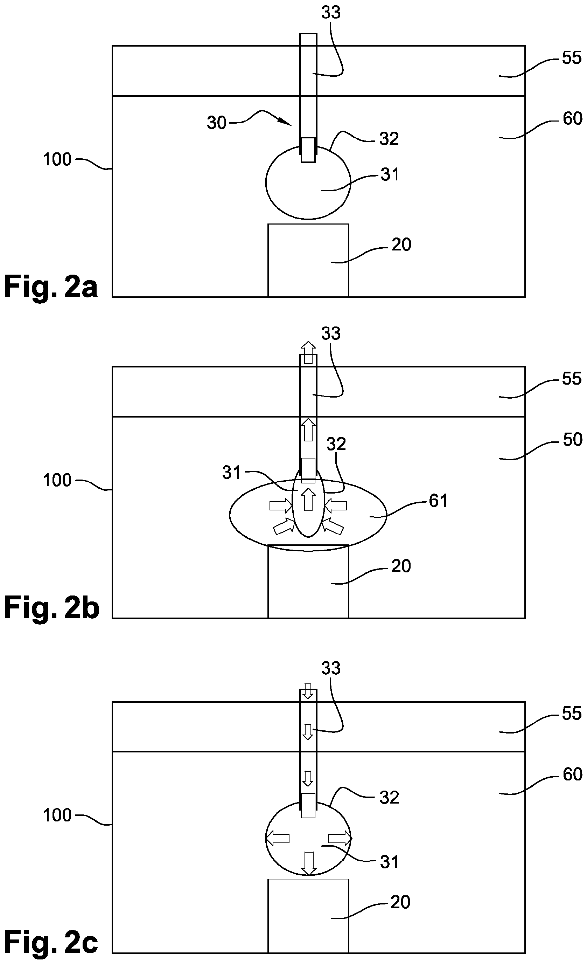

Fig. 2a-2c shows representations of the storage system of the invention that correspond to the representations of Fig. 1a-c.

In the initial phase as shown in Fig. 2a, the tank 100 is filled with the urea precursor solution in liquid state 60. A vapour space 55 is present above the liquid solution 60. Moreover a freeze protection device 30 is present. This freeze protection device 30 comprises a cavity 31 with a deformable, first wall 32. This cavity 31 is suitably located on top of a component 20. The deformable first wall 32 is here balloon-shaped, but that is merely one implementation. A venting channel 33 acts as an exit for a fluid in the cavity 31 and extends to an outside of the tank shell 100. The first wall 32 is in this embodiment composed of an elastomer (polymer) material, such as Santoprene™ 101-73 commercially available from ExxonMobil. The first wall 32 is suitably prestretched so as to be in a relatively expanded configuration when at or above room temperature.

In the freezing phase as shown in Fig. 2b, the liquid solution 60 is frozen to a frozen, solid solution 50, while a remaining liquid pocket 61. The pressure in this liquid pocket 61 has increased. This pressure needs to go away, and as a result is exerted on the deformable wall 32 of the freeze protection device 30. The deformable wall 32 deforms so that the volume of the liquid pocket 61 may expand and the overall pressure is reduced. As a result, the cavity 31 shrinks, which is enabled with the venting channel allowing fluid inside the cavity 31 to be transferred to outside the tank 100.

In the thawing phase as shown in Fig 2c, the frozen solution 50 is molten again to liquid solution 60. The deformable wall 32 returns to its initial configuration, and the volume of the cavity 31 has increased again. Thereto, fluid flows back into the cavity 31 via the venting channel 33. A membrane or other means for selective permeation may be present so as to above that contaminants, including dust, particles, water or oil, enter the freeze protection device 30.

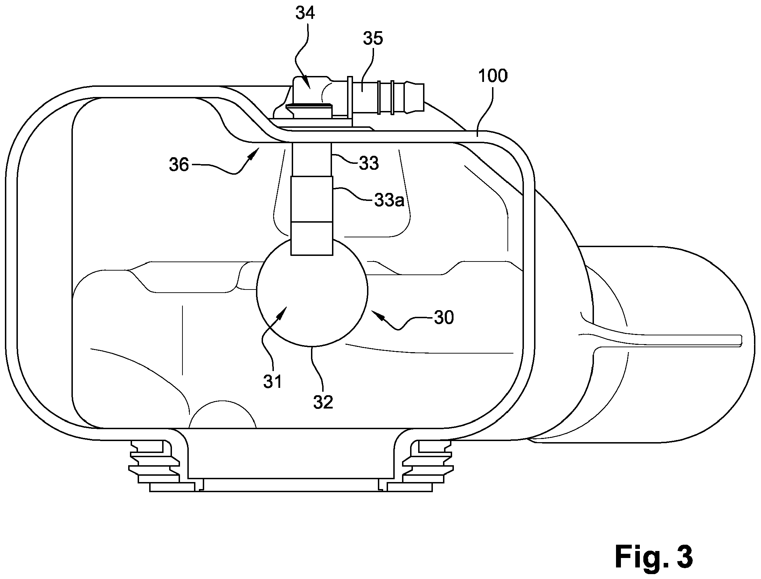

Fig. 3 shows an embodiment of the storage system 100 in a cross-sectional view, when empty. No component is shown. This is suitably assembled separately. However, the invention may also be useful without such component, particularly for protecting the tank shell 100 itself. Such protection is deemed useful in dependence of the tank design.

As shown herein the deformable wall 32 is coupled to a venting channel 33. In this embodiment a portion 33a of the deformable wall is drawn over the venting channel 33, which is assembled to the tank shell 100 with an assembly means 36. This is suitably carried out by means of hot plate welding as known per se to the skilled person. The freeze protection device 30 is further provided with an outside portion 34 at which a connector 35 is present. A venting tube may be connected thereto. The outside portion 34 could contain an access to a secondary cavity, in which fluid may be stored preferentially. A pumping means could further be present, for instance at the outside portion, but alternatively attached to the venting tube (not-shown). It is observed that a storage system 100 is suitably provided with a venting nipple. In a preferred embodiment of the invention, the venting nipple may be combined with the freeze protection device 30. One example implementation thereof is that a second assembly means extends from the outside portion 34 through the tank shell 100. In this manner the one venting tube will be applicable for both the venting nipple function and the freeze protection function.

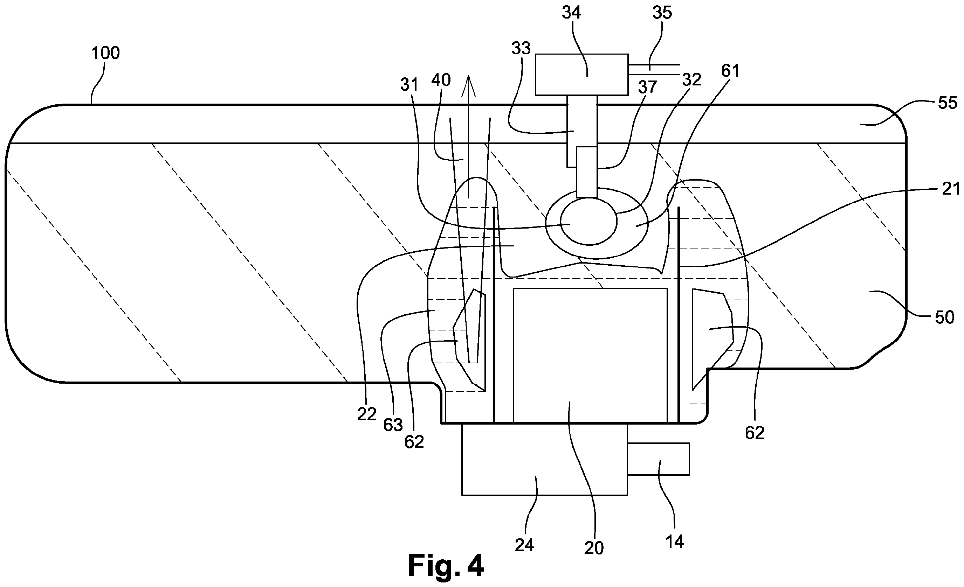

Fig. 4 shows another embodiment of the storage system according to the invention. This storage system is provided with two types of freeze protection devices 30, 40, which furthermore operate according to different principles. The first type of freeze protection device is a gradual freeze protection. In this embodiment, the freeze protection device 30 according to the invention is used thereto. The second type of freeze protection device is a refreezing freeze protection. Thereto, a freeze protection device is used which operates on the principle of moving a frozen portion of the solution under the pressure in the liquid pocket, in this embodiment liquid pocket 62. This liquid pocket 62 is present in a refrozen portion 63 of the solution. It is however observed that the freeze protection device of the invention could also be applied for the refreezing freeze protection. Furthermore, the freeze protection device on the basis of the movable frozen portion could be used for the gradual freeze protection. The latter exchange of freeze protection devices even may be preferred, in the sense that less volume reduction but a long access is needed for the refreezing freeze protection, while the cavity 31 for a gradual freeze protection may be quite big, and therewith reduces the effective tank volume. The freeze protection of the other principle is filled with solution, and therewith effectively consumes hardly any space.

While this Figure 4 shows for reasons of illustration a first liquid pocket 61 and a second liquid pocket 62 resulting from melting and refreezing together, it is observed that the first and second liquid pockets 61, 62 are likely to be formed at different stages rather than being present simultaneously.

The storage system shown in Fig. 4 comprises a tank 100 to which a delivery module is assembled. The tank 100 is filled with a solution up to a level, above which a vapour space 55 is present. The delivery module comprises a first component 20 inside the tank, a further part 24 outside the tank 100 as well as a fench 21, and a supply cord 14. The delivery module serves as a subassembly for several components and as a packaged and sealed electrical interface. The delivery module further comprises an outlet (not shown), through which the solution is delivered for injection into exhaust gases. Typically, as known in the art, this occurs via an injection line. In the present embodiment, the delivery module is assembled at a bottom side of the tank. This is deemed beneficial since the solution can be taken from the bottom side. Moreover, the bottom side location appears beneficial from design perspective. Furthermore, the delivery module may be provided with a heating element in the form of a mat. Such a mat is for instance a flexible sheet of multilayer structure. The mat-shaped heating element may cover individual components in the delivery module, therewith ensuring that the solution is liquid when the storage system gets to operation. The mat is typically assembled to the fence 21 being provided around the components. The fence 21 is suitably cylindrical in shape and provided with windows (not shown). Alternative designs are however not excluded. In addition thereto, the mat and the fence 21 tend to influence a temperature distribution within the tank, also in the case that the engine is switched off and therefore the heating element is not operative. Particularly, they tend to result therein that a cavity 22 inside the fench becomes a hot spot in a cold environment.

The freeze protection device 40 operates according to the principle of movement of a part of the frozen body. Herein the pressure is released in a controlled and predefined manner. The freeze protection device 40 specifies a propagation direction (indicated with an arrow) for the pressure release. More particularly, the means 40 separate a portion of the frozen body 50 from the rest thereof. Under the high pressure, this local portion becomes movable and is moved in the propagation direction. In a preferred embodiment, the freeze protection device 40 define a channel, which widens in the propagation direction. This allows that the local portion will be liberated sidewise, just as a stop of a laboratory flask, which is no longer fixed onto the flask. Once that the local portion has been liberated, it may fall down, but it may be easily reopened by a subsequent pressure wave, due to further freezing and/or migration of further liquid towards the pressure release means.

The location of the liquid pocket 61 may well be predicted roughly, though environmental conditions may also have an impact on its development. This freeze protection device 40 is open for the solution 50 and may thereto be provided with apertures or the like. Therefore, the device 40 can be assumed, in a first order estimate, not to influence the temperature distribution. The liquid pocket 62 may be continuous through the area inside the pressure release means.

In one further embodiment, the location of the liquid pocket 61 could be steered. This is not only achievable on the basis of the design of the tank and the delivery module, but also by temporarily starting the heating element. While continuous operation of such heating element is not feasible, it appears feasible that the heating element is started, on the basis of the engine's battery, from time to time, under the control of a controller device which has been provided with temperature data and a clock and the like. The heating element would just be started so as to steer the generation of the liquid pocket 61 near to the freeze protection device 40 adjacent to the heating element.

The freeze protection device 40 as indicated in Fig. 4 is preferably being tubular. In a further embodiment, these tubular means are flexible, so as to accommodate pressure variations, and to prevent cracking when a front of frozen material abuts the tubular means. For widening the channel, it is preferably that the tubular means have an increasing opening angle along the propagation direction. The opening angle is herein defined as the angle between the axis of the tubular means and the surface, when seen in cross-sectional view. More preferably, the tubular means at least partially conical in shape. Such means are suitably manufactured by means of injection moulding.

In an even further implementation, a surface of the freeze protection device 40 is treated to reduce the ice friction. The outside of the deformable wall 31 of the freeze protection device 30 according to the invention may also be given such a surface treatment. Therewith, a better sliding (i.e. displacement) of the ice relative to the wall 31 is obtained of the local frozen portion. The surface is for instance treated with a hydrophobic material, for instance a wax or a coating material.

## Claims

1. A system for storing a solution (50) of ammonia precursor for use as an exhaust gas additive, which system is provided with a component and comprises:
- a tank (100) for storing the solution in a liquid state and/or a frozen state; and
- a freeze protection device (30) comprising a deformable first wall that at least partly defines a cavity for a fluid (31), said cavity (31) being deformable under pressure and comprising an exit (33) being in fluid communication with a fluid space, said cavity being configured to discharge the fluid from the cavity (31) into the fluid space such that an expansion of the solution (50) upon freezing is compensated by volume reduction of the cavity (31) under deformation of the cavity (31),
**characterized in that**
said component is a pumping means, a pressure regulator, a filter, a heating element, a feed nipple, or a delivery module which is assembled to a tank surface at a bottom side of the tank,
and said freeze protection device is designed and arranged to prevent fracture of the component (20) under said expansion of the solution (50)
wherein the cavity is located on top of the component,
wherein the first deformable wall contains a wall portion with a varying degree of deformability.

2. The system as claimed in the preceding claim wherein the first wall comprises elastomeric material.

3. The system as claimed in any of the preceding claims, further comprising a means for reversing said deformation of the cavity.

4. The system as claimed in claim 3, wherein said means comprises a pump for pumping said fluid back into the cavity.

5. The system as claimed in claim 3 or 4, wherein said means comprises a second cavity, such that the fluid leaving the deformable cavity upon expansion of the solution is transferred into said second cavity.

6. The system as claimed in any of the preceding claims, wherein the exit (33) extends to outside the tank.

7. The system as claimed in any of the preceding claims, wherein the protection device comprises a venting channel (33) defining the exit from the cavity (31).

8. The system as claimed in claim 7, wherein the venting channel (33) is assembled to the tank wall, for instance by means of welding.

9. The system as claimed in any of the preceding claims, wherein the exit is provided with means for selective permeation of the fluid.

10. The system as claimed in any of the claims 1-9, wherein the freeze protection device is further provided with a connector (35) located outside of the tank for connection of a venting tube.

11. The system as claimed in any of the claims 1-10, wherein the deformable cavity (31) has a shape of a balloon.

12. A selective catalytic reduction system for a vehicle comprising a storage system as claimed in any of the claims 1-11, an injector for injecting the solution or a reaction product thereof into exhaust gases, and an injection line between said storage system and said injector.

13. A vehicle comprising the storage system as claimed in any of the claims 1-11 and/or the selective catalytic reduction system as claimed in claim 12.

## Patentansprüche

1. System zum Speichern einer Lösung (50) eines Ammoniakvorläufers zur Verwendung als Abgasadditiv, wobei dieses System mit einer Komponente versehen ist und umfasst:
- einen Tank (100) zum Lagern der Lösung in flüssigem und/oder gefrorenem Zustand; und
- eine Frostschutzvorrichtung (30) die eine verformbare erste Wand umfasst, die zumindest teilweise einen Hohlraum für ein Fluid (31) definiert, wobei der Hohlraum (31) unter Druck verformbar ist und einen Ausgang (33) aufweist, der in Fluidverbindung mit einem Fluidraum steht, wobei der Hohlraum konfiguriert ist, um das Fluid aus dem Hohlraum (31) in den Fluidraum abzulassen, so dass eine Ausdehnung der Lösung (50) beim Einfrieren durch Volumenverringerung des Hohlraums (31) unter Verformung des Hohlraums (31) kompensiert wird,
**dadurch gekennzeichnet**
Die Komponente ist ein Pumpmittel, ein Druckregler, ein Filter, ein Heizelement, ein Zufuhrnippel oder ein Fördermodul, das an einer Tankoberfläche an einer Bodenseite des Tanks montiert ist, und die Frostschutzvorrichtung ist ausgelegt und angeordnet um einen Bruch der Komponente (20) unter der Expansion der Lösung (50) zu verhindern, wobei sich der Hohlraum oben auf der Komponente befindet, wobei die erste verformbare Wand einen Wandabschnitt mit einem variierenden Grad an Verformbarkeit enthält.

2. System nach dem vorhergehenden Anspruch, wobei die erste Wand Elastomermaterial umfasst.

3. System nach einem der vorhergehenden Ansprüche, ferner umfassend ein Mittel zum Umkehren der Verformung des Hohlraums.

4. System nach Anspruch 3, wobei das Mittel eine Pumpe zum Zurückpumpen des Fluids in den Hohlraum umfasst.

5. System nach Anspruch 3 oder 4, wobei das Mittel einen zweiten Hohlraum umfasst, so dass das Fluid, das den verformbaren Hohlraum beim Ausdehnen der Lösung verlässt, in den zweiten Hohlraum überführt wird.

6. System nach einem der vorhergehenden Ansprüche, wobei sich der Ausgang (33) nach außerhalb des Tanks erstreckt.

7. System nach einem der vorhergehenden Ansprüche, wobei die Schutzvorrichtung einen Entlüftungskanal (33) umfasst, der den Austritt aus dem Hohlraum (31) definiert.

8. System nach Anspruch 7, wobei der Entlüftungskanal (33) beispielsweise durch Schweißen an der Tankwand montiert ist.

9. System nach einem der vorhergehenden Ansprüche, wobei der Ausgang mit Mitteln zur selektiven Permeation des Fluids versehen ist.

10. System nach einem der Ansprüche 1 bis 9, wobei die Frostschutzvorrichtung ferner mit einem Verbinder (35) versehen ist, der sich außerhalb des Tanks zum Anschließen eines Entlüftungsrohrs befindet.

11. System nach einem der Ansprüche 1 bis 10, wobei der verformbare Hohlraum (31) die Form eines Ballons hat.

12. Selektives katalytisches Reduktionssystem für ein Fahrzeug, umfassend ein Speichersystem nach einem der Ansprüche 1 bis 11, einen Injektor zum Injizieren der Lösung oder eines Reaktionsprodukts davon in Abgase und eine Injektionsleitung zwischen dem Speichersystem und dem Injektor.

13. Fahrzeug, umfassend das Speichersystem nach einem der Ansprüche 1 bis 11 und/oder das selektive katalytische Reduktionssystem nach Anspruch 12.

## Revendications

1. Un système de stockage d'une solution (50) de précurseur d'ammoniac pour utilisation en tant qu'additif d gaz d'échappement qui est muni d'un composant et qui comprend:
- un réservoir (100) pour stocker la solution à l'état liquide et/ou congelé ; et
- un dispositif de protection contre le gel (30) comprenant une première paroi déformable qui définit au moins partiellement une cavité pour un fluide (31), ladite cavité (31) étant déformable sous pression et comprenant une sortie (33) qui est en communication fluidique avec un espace de fluide, ladite cavité étant configurée pour décharger le fluide de la cavité (31) dans l'espace de fluide de sorte qu'une expansion de la solution (50) lors du gel est compensée par une réduction de volume de la cavité (31) sous déformation de la cavité (31),
**caractérisé en ce que**
ledit composant est un moyen de pompage, un régulateur de pression, un filtre, un élément chauffant, un raccord d'alimentation ou un module de distribution qui est assemblé à une surface de réservoir sur un côté inférieur du réservoir, et ledit dispositif de protection contre le gel est conçu et agencé pour empêcher la rupture du composant (20) sous l'effet de ladite expansion de la solution (50) où la cavité est située sur le dessus du composant, où la première paroi déformable contient une partie de paroi avec un degré variable de déformabilité.

2. Système selon la revendication précédente, dans lequel la première paroi est constituée d'un matériau élastomère.

3. Système selon une quelconque des revendications précédentes, comprenant en outre un moyen pour inverser ladite déformation de la cavité.

4. Système selon la revendication 3, dans lequel ledit moyen comprend une pompe pour pomper en retour ledit fluide dans la cavité.

5. Système selon une des revendications 3 ou 4, dans lequel ledit moyen comprend une seconde cavité, de sorte que le fluide quittant la cavité déformable lors de l'expansion de la solution est transféré dans ladite seconde cavité.

6. Système tel que revendiqué dans l'une quelconque des revendications précédentes, dans lequel la sortie (33) s'étend à l'extérieur du réservoir.

7. Système tel que revendiqué dans l'une quelconque des revendications précédentes, dans lequel le dispositif de protection comprend un canal de ventilation (33) définissant la sortie de la cavité (31).

8. Système selon la revendication 7, dans lequel le canal de ventilation (33) est assemblé à la paroi du réservoir, par exemple au moyen d'une soudure.

9. Système selon l'une quelconque des revendications précédentes, dans lequel la sortie est pourvue de moyens de perméation sélective du fluide.

10. Système selon l'une quelconque des revendications 1 à 9, dans lequel le dispositif de protection contre le gel est en outre pourvu d'un connecteur (35) situé à l'extérieur du réservoir pour le raccordement d'un tube de ventilation.

11. Système selon l'une quelconque des revendications 1 à 10, dans lequel la cavité déformable (31) a la forme d'un ballon.

12. Système de réduction catalytique sélective pour un véhicule comprenant un système de stockage tel que revendiqué dans l'une des revendications 1 à 11, un injecteur pour injecter la solution ou un produit de réaction de celle-ci dans les gaz d'échappement, et une ligne d'injection entre ledit système de stockage et ledit injecteur.

13. Véhicule comprenant le système de stockage tel que revendiqué dans l'une quelconque des revendications 1 à 11 et/ou le système de réduction catalytique sélective tel que revendiqué dans la revendication 12.
